# EUROPÄISCHE PATENTSCHRIFT

(11) **EP 1 143 219 B1**
(45) Veröffentlichungstag und Bekanntmachung des Hinweises auf die Patenterteilung: **12.01.2011**
(21) Anmeldenummer: 01108377.1
(22) Anmeldetag: 03.04.2001
(51) Int. Cl.: G01B 5/255, G01B 21/26, G01M 17/007

(54) **Verfahren zur Positionierung eines Fahrzeugs auf einem Fahrwerkmessstand zwecks Einstellung bzw. Messung der Geometrie der Radachsen**
Procedure to position a car on a wheel alignment installation for wheel axle geometry measurement
Procédé pour positionner une automobile sur une installation d'alignement de roues pour effectuer l'alignement géométrique des roues

(30) Priorität: 04.04.2000 DE 10016366
(43) Veröffentlichungstag der Anmeldung: 10.10.2001
(73) Patentinhaber: Schenck Final Assembly Products GmbH, 66346 Püttlingen (DE)
(72) Erfinder: Wagner, Peter, 66538 Neunkirchen (DE); Rödder, Hans, 66123 Saarbrücken (DE); Tentrup, Thomas, Dr. rer. nat., 66459 Kirkel (DE)
(74) Vertreter: Wieske, Thilo

(56) Entgegenhaltungen:
- EP-A- 0 504 438
- DE-C- 3 830 050
- FR-A- 2 263 500
- GB-A- 1 033 964
- US-A- 2 755 554
- US-A- 4 631 832

## Beschreibung

Die Erfindung betrifft ein Verfahren zur Positionierung eines Fahrzeugs auf einem Fahrwerkmessstand nach dem Oberbegriff des Patentanspruchs 1.

Der Anmelderin ist es bekannt, Fahrzeuge auf einem Fahrwerkmessstand zu positionieren, der Radaufnahmen aufweist, auf denen die Räder des Fahrzeugs zum Stehen kommen. Beim Auf- und Abfahren des Fahrzeugs auf den Messstand bzw. von dem Messstand werden diese Radaufnahmen blockiert. Das bedeutet, dass auf diese Radaufnahmen Kräfte aufgebracht werden, aufgrund derer die einzelnen Radaufnahmen jeweils in Geradeausrichtung des Fahrwerkmessstandes ausgerichtet werden.

Nachdem das Fahrzeug auf den Fahrwerkmessstand aufgefahren ist, wird die Blockierung der Radaufnahmen gelöst. Jede der Radaufnahmen weist in diesem Zustand einen Drehpunkt in der Horizontalen auf, um den die Radaufnahme drehbar ist. Dieser Drehpunkt kann so realisiert sein, dass jede Radaufnahme mittels einer mit der Radaufnahme verbundenen Führung entlang einer Kulisse führbar ist derart, dass die Radaufnahme zunächst seitlich bewegbar ist bis die Führung der Radaufnahme bei Erreichen eines bestimmten Punktes der Kulisse in diesem einen Punkt stabil gehalten wird und dadurch um diesen Punkt drehbar ist. Die seitliche Bewegung der Radaufnahme wie auch eine Drehung der Radaufnahme hängen davon ab, ob von dem jeweiligen Rad des Fahrzeugs eine Kraft auf die Radaufnahme ausgeübt wird.

Diese Radaufnahmen können jeweils zwei Rollen aufweisen, auf denen ein Rad des Fahrzeugs zum Stehen kommt. Der Anmelderin ist auch eine Ausführungsform einer Radaufnahme bekannt, bei der das Rad des Fahrzeugs auf einem Band steht, das über zwei Rollen geführt und ggf. angetrieben wird. Das Fahrzeug steht also in diesem Fall lediglich mittelbar auf den beiden Rollen.

Wenn die Radaufnahme wie beschrieben freigegeben wird und dann entsprechend der Kulisse führbar ist, wird jeweils wenigstens eine dieser Rollen einer Radaufnahme motorisch angetrieben in eine Drehung um die Längsachse der Rolle versetzt. Die Räder des Fahrzeugs sind drehbar, so dass sich das Fahrwerk des Fahrzeugs entspannen kann. Eine Kraft wird dabei von dem jeweiligen Rad des Fahrzeugs auf die Radaufnahme ausgeübt, wenn die Längsachsen der Rollen der Radaufnahme nicht zumindest annähernd senkrecht auf der Radebene stehen. Dass sich dabei die Radaufnahme des Messstandes bewegt und nicht das Fahrzeug, wird erreicht, indem das Fahrzeug mechanisch gehalten wird. Dazu wird das Fahrzeug beispielsweise mittels einer Haltevorrichtung beispielsweise an der Stoßstange gehalten, so dass eine Bewegung des Fahrzeugs vermieden wird. Ebenso können über die Haltevorrichtung Kräfte auf das Fahrzeug ausgeübt werden, um das Fahrzeug im Fahrwerkmessstand zu positionieren. Auf dem Fahrwerkmessstand kann dann die Geometrie der Radachsen der Achse eines Fahrzeugs gemessen werden wie beispielsweise Spur- und/oder Sturzwinkel.

Für eine Einstellung der Geometrie der Radachsen der Räder einer Achse am stehenden Rad werden die Radaufnahmen völlig freigegeben, so dass sich die Räder des Fahrzeugs bei einer Einstellung der Geometrie der jeweiligen Radachsen reibungsfrei gegenüber der Aufstandsfläche bewegen können. Die Räder stehen zwar nach wie vor fest auf der Radaufnahme. Letztlich sind die Räder aber zusammen mit der jeweiligen Radaufnahme reibungsfrei bewegbar, weil die einzelnen Radaufnahmen zusammen mit dem Rad bewegbar sind und die Radaufnahmen zumindest weitgehend reibungsfrei gelagert sind. Insbesondere sind die Radaufnahmen dann also nicht lediglich um einen definierten Drehpunkt drehbar sondern völlig frei in der Horizontalen bewegbar.

Zum Verlassen des Fahrwerkmessstandes werden die Radaufnahmen wiederum blockiert und dabei gegen die Kräfte der aufstehenden, in diesem Fall stehenden und nicht über die wenigstens eine antreibbare Rolle der jeweiligen Radaufnahme angetriebenen Räder des Fahrzeugs in Geradeausrichtung des Messstandes ausgerichtet.

Zum Stand der Technik sei weiterhin auf die GB 1033964 B1 verwiesen sowie die DE 3830050 C1. Aus diesen Entgegenhaltungen ist es ebenfalls bekannt, die Radaufnahmen eines Prüfstandes mit Stellelementen zu versehen. Bei der GB 1033964 B1 dienen diese Stellelemente dazu, die Einstellung der Radaufnahmen in der Weise zu unterstützen, dass sich die Radaufnahmen so orientieren, dass deren Orientierung der Orientierung der Radachse entspricht. Bei der DE 3830050 C1 dienen die Stellelemente dazu, die Radaufnahmen so einzustellen, dass im Prüfbetrieb Kräfte auf die Räder des Fahrzeugs einleitbar sind, die den Kräften entsprechen, die im Fahrbetrieb von der Fahrbahn auf das Fahrzeug ausgeübt werden. Mittels Stellelemente sind die Radaufnahmen um einen Drehpunkt drehbar. Wenigstens eine Rolle der Radaufnahme ist motorisch antreibbar.

Der vorliegenden Erfindung liegt die Aufgabe zugrunde, die Positionierung eines Fahrzeugs zu vereinfachen.

Diese Aufgabe wird erfindungsgemäß durch ein Verfahren nach Anspruch 1 gelöst, wonach zur Positionierung des Fahrzeugs in seitlicher Richtung wenigstens eine Rolle einer Radaufnahme wenigstens eines Rades jeder Achse des Fahrzeugs motorisch angetrieben wird, wobei die Radaufnahme mittels eines Stellelementes durch eine Drehung um den Drehpunkt jeweils gegenüber der Radebene derart positioniert wird, dass durch die Radaufnahme eine Kraft auf das Rad ausgeübt wird, so dass das Fahrzeug in seitlicher Richtung in eine bestimmte Position gebracht wird.

Vorteilhaft entfällt dadurch die Notwendigkeit, das Fahrzeug zu halten, um das Fahrzeug zu positionieren und auch zu halten. Weiterhin erweist es sich als vorteilhaft, dass bei der Drehung der Räder zur Entspannung des Fahrwerks gleichzeitig die Positionierung des Fahrzeugs erfolgt.

Entsprechend obigen Ausführungen kann der Drehpunkt beispielsweise so realisiert sein, dass die Radaufnahme mittels Führungen entlang von Rollen bewegbar ist, wobei der definierte Drehpunkt durch Einspannen der Führungen an den Rollen erzeugt wird.

Vorteilhaft wird also bei der Ausgestaltung des Verfahrens nach Anspruch 1 mittels eines Stellelements eine Drehung der Radaufnahme herbeigeführt, wobei bei einer geeigneten Wahl des Drehpunktes dadurch eine Kraft auf das jeweilige Rad geleitet wird, wodurch wiederum das Fahrzeug in eine bestimmte Position gebracht und auch in dieser Position gehalten werden kann.

Vorteilhaft kann also die Haltevorrichtung für das Fahrzeug entfallen. Die entsprechenden Kräfte werden durch eine entsprechende Positionierung der entsprechenden Radaufnahmen gegenüber den Radebenen auf das Fahrzeug aufgebracht.

Bei der Ausgestaltung des Verfahrens nach Anspruch 2 wird die Istposition des Fahrzeugs erfasst und mit einer Sollposition des Fahrzeugs verglichen, wobei die Positionierung der Radaufnahmen gegenüber den jeweiligen Radebenen abhängig von einer Abweichung der Istposition von der Sollposition erfolgt.

Dieses Verfahren beschreibt eine Vorgehensweise, bei der die Position des Fahrzeugs geregelt wird. Die auf das Fahrzeug über die Veränderung (Drehung) der entsprechenden Radaufnahmen einwirkenden Kräfte werden so angepasst, dass das Fahrzeug auf seine Sollposition geführt wird.

Gemäß der Ausgestaltung des Verfahrens nach Anspruch 3 erfolgt eine Positionierung des Fahrzeugs, indem Kräfte auf jeweils genau ein Rad jeder Fahrzeugachse aufgebracht werden.

Das Fahrzeug kann positioniert werden, indem auf ein Vorderrad und ein Hinterrad jeweils einer Fahrzeugseite Kräfte aufgebracht werden. Auf die Räder der anderen Fahrzeugseite werden dann keine Kräfte aufgebracht. Das bedeutet, dass sich hier die Radaufnahmen entsprechend den Radebenen drehen und ausrichten. Es kann sich dabei um das Vorderrad und Hinterrad derselben Fahrzeugseite handeln.

Bei der Ausgestaltung des Verfahrens nach Anspruch 4 erfolgt eine Positionierung des Fahrzeugs, indem Kräfte auf die Räder beider Fahrzeugseiten aufgebracht werden.

Damit stehen mehr Stellgrößen zur Durchführung der Regelung zur Verfügung, wobei aber gegenüber der Ausführungsform nach Anspruch 3 mehr Stellelemente benötigt werden.

Bei der Ausgestaltung des Verfahrens nach Anspruch 5 erfolgt eine Einstellung der Geometrie der Radachsen der Räder, wenn die Räder des Fahrzeugs stillstehen, wobei die Radaufnahmen mehrerer anderer Räder in ihrer momentanen Position gebremst werden und wobei die Radaufnahme des Rades, dessen Spur- und Sturzwinkel eingestellt werden soll, in der Horizontalen frei beweglich ist.

Durch das Freigeben im Sinne einer weitestgehend reibungsfreien Beweglichkeit in der Horizontalen der Radaufnahme des Rades, dessen Spur- und/oder Sturzwinkel eingestellt werden soll, wird erreicht, dass die jeweilige Radaufnahme der Veränderung des Rades bei der Verstellung des Spur- und/oder Sturzwinkels folgen kann. Indem weiterhin die Radaufnahme wenigstens eines weiteren Rades gebremst werden, das heißt also in ihrer momentanen Lage fixiert werden, kann verhindert werden, dass das Fahrzeug seine Position verändert. Es müssen die Radaufnahmen wenigstens zweier anderer Räder gebremst werden.

Auch bei der Einstellung des Spur- und/oder Sturzwinkels oder anderer die Gemoetrie der Radachsen eines Rades bestimmenden Parameter kann das Fahrzeug also auf dem Messstand gehalten werden.

Zur bautechnischen Realisierung kann ein Fahrwerkmessstand so ausgestaltet sein, dass dieser jeweils eine Radaufnahme für jedes Rad aufweist, wobei diese Radaufnahmen in einer ersten Betriebsweise in einer definierten Stellung bezogen auf den Fahrwerkmessstand blockierbar sind, und von denen jeweils eine Radaufnahme für zumindest ein Rad einer jeden Fahrzeugachse in einer zweiten Betriebsweise bei motorischem Antrieb wenigstens einer Rolle der jeweiligen Radaufnahme mittels eines Stellelements um einen definierten oder definierbaren Drehpunkt drehbar ist.

Die Radaufnahme ist also mittels des Stellelements positionierbar derart, dass die Längsachsen der Rollen der Radaufnahme gegenüber der Radebene einen einstellbaren Winkel aufweisen. Durch die damit übertragbaren Kräfte auf das Rad ist das Fahrzeug positionierbar. Die Vorrichtung ist dabei vorteilhaft so ausgestaltet, dass für jede Fahrzeugachse zumindest ein Rad auf einer Radaufnahme steht, die mit einem solchen Stellelement ausgerüstet ist.

Weiterhin können zumindest einzelne Radaufnahmen in einer dritten Betriebsweise in der momentanen Stellung bremsbar sein. Weiterhin sind die Radaufnahmen in einer vierten Betriebsweise durch eine Einzelansteuerung in der Horizontalen frei beweglich.

Die dritte und die vierte Betriebsweise treten dabei "gemischt" auf. Das heißt, dass zur Einstellung des Spur- und/oder Sturzwinkels eines Rades dessen Radaufnahme völlig freigegeben wird. Das Rad steht nach wie vor fest auf der Radaufnahme. Indem allerdings diese Radaufnahme jetzt in der vierten Betriebsweise möglichst reibungsarm in der Horizontalen frei beweglich ist, kann die Radaufnahme Veränderungen der Stellung des Rades bei der Einstellung des Spur- und/oder Sturzwinkels folgen. Indem wenigstens zwei Radaufnahmen gebremst werden, kann verhindert werden, dass das Fahrzeug sich bei der Einstellung bewegt. Das Fahrzeug wird also durch andere Radaufnahmen, die gebremst werden, in seiner momentanen Stellung gehalten. Das Bremsen der Radaufnahmen kann erfolgen, indem Bremselemente an die Radaufnahme angedrückt werden. Die Radaufnahmen werden also in der dritten Betriebsweise durch die Kräfte der Bremselemente in der momentanen Stellung gehalten. Bei einer Einstellung des Spur- und/oder Sturzwinkels eines Vorderrades können beispielsweise die Radaufnahmen der Hinterräder blockiert sein. Ebenso ist es möglich, dass bei einer Einstellung eines Rades auf der linken Fahrzeugseite die Radaufnahmen der Räder der rechten Fahrzeugseite blockiert sind. Es ist aber auch möglich, nur jeweils die Radaufnahme in der vierten Betriebsweise zu betreiben, an deren Rad eine Einstellung des Spur- und/oder Sturzwinkels vorgenommen werden soll. Die übrigen Radaufnahmen werden dann in der dritten Betriebsweise betrieben, das heißt also gebremst.

Die Radaufnahmen sind in einer fünften Betriebsweise bei motorischem Antrieb wenigstens einer Rolle der jeweiligen Radaufnahme um einen definierten oder definierbaren Drehpunkt durch äußere Krafteinwirkung drehbar.

Ein Ausführungsbeispiel der Erfindung ist in der Zeichnung näher dargestellt. Es zeigt dabei im einzelnen:
- Fig. 1:: einen Fahrwerkmessstand mit vier Radaufnahmen,
- Fig. 2:: eine Radaufnahme in einer Seitenansicht und
- Fig. 3-5:: Darstellungen der Realisierung der Betriebsweisen der Radaufnahme.

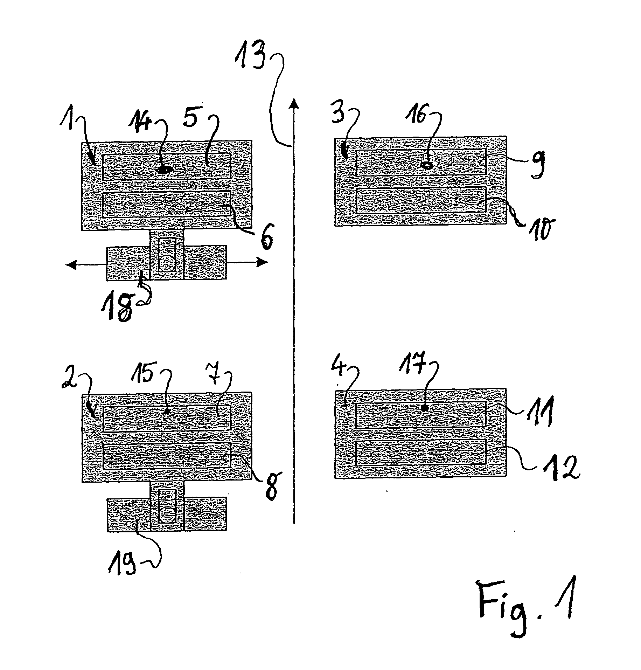

Figur 1 zeigt einen Fahrwerkmessstand mit vier Radaufnahmen 1, 2, 3 und 4. Jede dieser Radaufnahmen 1, 2, 3 und 4 weist jeweils zwei Rollen 5, 6; 7, 8; 9, 10; 11,12 auf, auf denen jeweils ein Rad eines Fahrzeugs zum Stehen kommt. Mit dem Pfeil 13 ist die Fahrtrichtung des Fahrzeugs bezeichnet.

In einem ersten Schritt werden alle Radaufnahmen blockiert, so dass diese sich bezogen auf den Messstand ausrichten. Üblicherweise werden diese Radaufnahmen bezogen auf den

Messstand in Geradeausrichtung blockiert. Das Fahrzeug fährt dann so auf, das jedes Rad jeweils auf zwei Rollen 5, 6; 7, 8; 9, 10; 11,12 einer Radaufnahme 1, 2, 3, 4 zum Stehen kommt.

Die Radaufnahmen 1, 2, 3, 4 werden dann freigegeben, indem die Blockierung gelöst wird. Jede der Radaufnahmen 1, 2, 3 und 4 weist einen Drehpunkt 14, 15, 16, 17 auf, um den sich die Radaufnahme drehen kann. Weiterhin wird zumindest eine der Rollen 5, 6; 7, 8; 9, 10; 11,12 einer jeden Radaufnahme 1, 2, 3 und 4 motorisch um deren Längsachse gedreht, so dass sich die Räder des Fahrzeugs mit den Rollen 5, 6; 7, 8; 9, 10; 11,12 mitdrehen.

Eventuelle mechanische Spannungen im Fahrwerk werden dadurch abgebaut.

Weiterhin erfolgt eine Messung der Istposition des Fahrzeugs, die mit einer Sollposition verglichen wird. Bei einer Abweichung der Istposition von der Sollposition erfolgt eine geführte Verdrehung zumindest einer der beiden Radaufnahmen 1 und/oder 2, die in dem gezeigten Ausführungsbeispiel mit jeweils einem Stellelement 18 bzw. 19 versehen sind. Mittels dieses Stellelements sind die Radaufnahmen 1 bzw. 2 in einer geführten Verdrehung um ihren jeweiligen Drehpunkt 14 bzw. 15 positionierbar bezüglich der Radebenen der auf den Radaufnahmen 1 und 2 stehenden Räder des Fahrzeugs. Durch die Verdrehung der jeweiligen Radaufnahme 1 bzw. 2 werden die Längsachsen der Rollen 5, 6 sowie 7, 8 mitgedreht. Dadurch werden Kräfte auf die jeweiligen Räder des Fahrzeugs aufgebracht, die auf den Rollen 5, 6 sowie 7, 8 stehen. Dadurch ist das Fahrzeug auf dem Fahrwerkmessstand seitlich positionierbar, ohne dass das Fahrzeug an der Karosserie mit Puffern einer Haltevorrichtung gehalten werden müsste.

Wenn sich das Fahrzeug in seiner Sollposition befindet und das Fahrwerk entspannt ist, werden die angetriebenen Rollen 5, 6; 7, 8; 9, 10; 11, 12 der Radaufnahmen 1, 2, 3 und 4 und damit auch die Räder des Fahrzeugs angehalten. Weiterhin sind die Radaufnahmen 1, 2, 3, 4 bremsbar. Das bedeutet, dass die Radaufnahmen 1, 2, 3, und 4 in ihrer momentanen Stellung mittels Bremselementen 22 gehalten werden. Diese Bremselemente 22 üben Reibungskräfte auf die einzelnen Radaufnahmen 1, 2, 3, und 4 aus. Durch eine Bremsung von Radaufnahmen kann das Fahrzeug auf dem Messstand gehalten werden. Indem diese Bremsung der Radaufnahmen 1, 2, 3, 4 jeweils einzeln lösbar ist, können dann Spurwinkel und Sturz der einzelnen Räder nacheinander eingestellt werden, indem die Bremsung der jeweiligen Radaufnahme 1, 2, 3, 4 gelöst wird, auf der das entsprechende Rad steht. Dadurch kann diese Radaufnahme eventuellen Bewegungen und Lageveränderungen des Rades bei der Einstellung folgen. Durch die weiterhin bestehende Bremsung der anderen Radaufnahmen 1, 2, 3, 4 wird verhindert, dass das Fahrzeug bewegt wird. Nachdem das Rad eingestellt ist, wird die entsprechende Radaufnahme 1, 2, 3, 4 wieder gebremst und gegebenenfalls die Bremsung einer anderen Radaufnahme 1, 2, 3, 4 gelöst, um Einstellungen an diesem Rad vornehmen zu können.

Wenn das Fahrzeug nach der Einstellung der Geometrie der Radachsen aller einzustellenden Räder den Fahrwerkmessstand verlässt, werden wiederum alle Radaufnahmen 1, 2, 3, 4 blockiert, das heißt bezogen auf den Messstand ausgerichtet.

Aufgrund der Lage der Drehpunkte unter Beachtung der Drehrichtung der Rollen für eine Simulation einer Vorwärtsfahrt ist das Fahrzeug bei den in Figur 1 gezeigten Verhältnissen stabilisierbar.

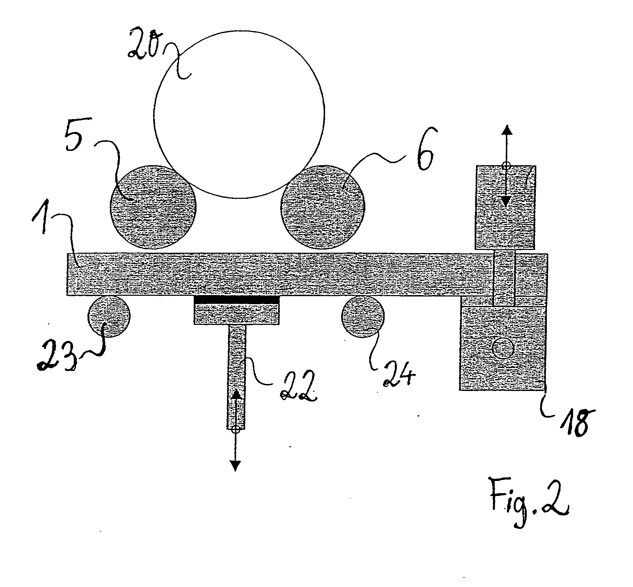

Figur 2 zeigt die Radaufnahme 1 in Seitenansicht. Es ist das Stellelement 18 zu sehen, mit dem die Radaufnahme 1 um einen Drehpunkt drehbar ist. Weiterhin sind die Rollen 5 und 6 zu sehen, auf denen ein Rad 20 steht. Die Radaufnahme 1 ist auf Rollen 23 und 24 gelagert, so dass die Radaufnahme 1 in der horizontalen Ebene beweglich ist, wenn diese nicht blockiert ist. Zur Bremsung der Radaufnahme 1 ist ein Bremselement 22 vorhanden. Dieses ist entsprechend den gezeigten Pfeilen aufwärts und abwärts bewegbar. Wird das Bremselement 22 aufwärts bewegt und befindet sich dann in der oberen Position, ist die Radaufnahme 1 in ihrer momentanen Stellung gebremst. Dies entspricht dann der dritten Betriebsweise. Bei allen anderen Betriebsweisen ist das Bremselement 22 in der unteren Position. Von dem Bremselement 22 werden dann keine Kräfte auf die Radaufnahme aufgebracht. Die Radaufnahme 1 ist dann beweglich bzw. bewegbar oder auch bezogen auf den Messstand blockierbar.

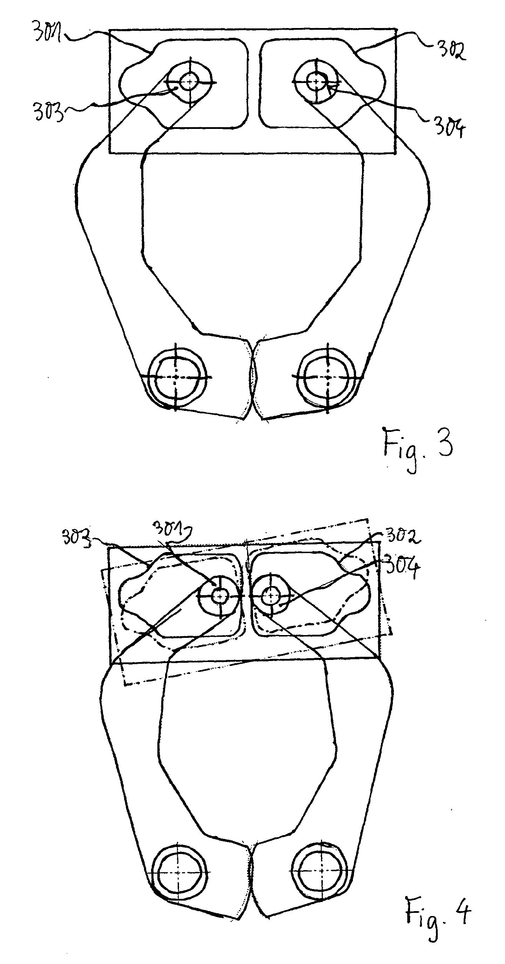

Figur 3 zeigt zwei Führungen 301 und 302, die mit der Radaufnahme fest verbunden sind. Es sind weitere Rollen 303 und 304 zu sehen, die in verschiedenen Positionen mit dem Messstand fest verbindbar sind. Indem die Rollen 303 und/oder 304 anliegen, ist die Radaufnahme dann entsprechend blockiert, drehbar um einen definierten Drehpunkt oder völlig frei bewegbar.

In der in Figur 3 gezeigten Stellung sind die beiden Rollen 303 und 304 in einer Mittelstellung zu sehen. In der Ausgangsstellung liegt keine der beiden Führungen 301 oder 302 an einer der Rollen 303 oder 304 an. Die Radaufnahme ist dann also zunächst in der Horizontalen in allen Richtungen frei bewegbar.

Figur 4 zeigt die Stellung der Rollen 303 und 304 entsprechend der Darstellung in Figur 3. Aufgrund einer Einspannbewegung der Rollen 303 und 304 liegen jetzt die Führungen 301 und 302 an der jeweiligen Rolle 303 und 304 an. Als Reaktion auf die wirkenden Kräfte ist die Radaufnahme jetzt noch drehbar. Der Drehpunkt 14 wird durch das Tangieren der Führung 301 an der Rolle 303 und das Tangieren der Führung 302 an der Rolle 304 definiert. Das bedeutet also, dass der Drehpunkt 14 nicht starr vorgegeben ist bezogen auf die Radaufnahme, sondern dass der Drehpunkt 14 entsprechend der Form der Führungen 301 und 302 und entsprechend den wirkenden Kräften definierbar ist, indem diese Führung 301 an einem Punkt der Rolle 303 anliegt und indem die Führung 302 an einem Punkt an der Rolle 304 anliegt.

Die Darstellung der Stellung der Rollen 301 und 302 der Figur 3 entspricht der vierten Betriebsweise, die Darstellung der Figur 4 entspricht der fünften und der zweiten Betriebsweise. Auch wenn nur einige der Radaufnahmen mit einem Stellelement versehen sind, sind bei einer Positionierung der entsprechenden Radaufnahmen auch die Rollen 301 und 302 der anderen Radaufnahmen in der entsprechenden Stellung. Bei diesen Radaufnahmen werden allerdings keine Kräfte auf das Fahrzeug übertragen. Vielmehr werden hier die Radaufnahmen entsprechend den Rädern ausgerichtet.

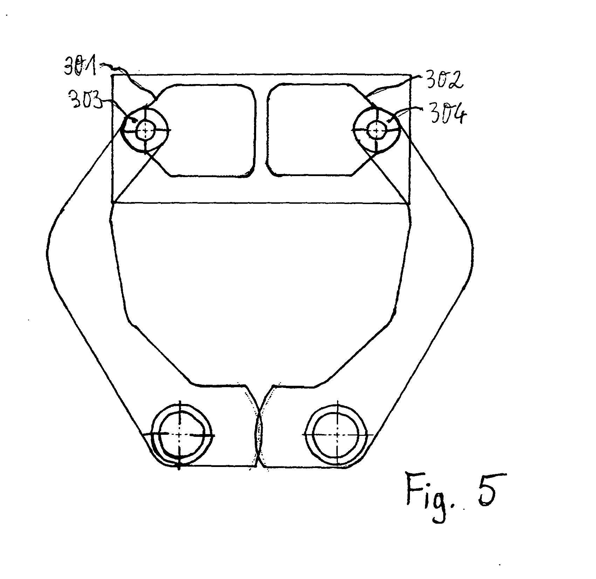

Figur 5 zeigt eine Stellung der Rollen 303 und 304, bei der diese ganz nach außen gedrückt werden. Entsprechend der Form der Führungen 301 und 302 liegen die Rollen 303 und 304 aufgrund der auf die Rollen 303 und 304 ausgeübten Kräfte jetzt an den gezeigten Punkten der Führungen 301 und 302 an. In diesem Fall wird also die Radaufnahme über die Führungen 301 und 302 entsprechend den auf die Rollen 303 und 304 ausgeübten Kräften ausgerichtet. Dies entspricht der vorstehend beschriebenen ersten Betriebsweise, in der die Radaufnahme in einer festen Stellung bezogen auf den Fahrwerkmessstand blockierbar ist.

## Patentansprüche

1. Verfahren zur Positionierung eines Fahrzeugs auf einem Fahrwerkmessstand zur Messung, bzw. Messung und Einstellung, der Geometrie von Radachsen von Rädern des Fahrzeugs, wobei die Räder (20) jeweils zumindest mittelbar auf zwei Rollen (5, 6; 7, 8; 9, 10; 11, 12) einer Radaufnahme (1, 2, 3, 4) stehen, von denen jeweils wenigstens eine motorisch in einer Rotation um die Längsachse der Rolle (5, 6; 7, 8; 9, 10; 11, 12) bewegbar ist, wobei die Radaufnahme (1, 2, 3, 4) jeweils um einen Drehpunkt (14, 15, 16, 17) drehbar gelagert wird,
**dadurch gekennzeichnet, dass** zur Positionierung des Fahrzeugs in seitlicher Richtung wenigstens eine Rolle (5, 6; 7, 8; 9, 10; 11, 12) einer Radaufnahme (1, 2, 3, 4) wenigstens eines Rades jeder Achse des Fahrzeugs motorisch angetrieben wird und dass die Radaufnahme (1, 2, 3, 4) mittels eines Stellelementes durch eine Drehung um den Drehpunkt (14, 15, 16, 17) jeweils gegenüber der Radebene derart positioniert wird, dass durch die Radaufnahme (1, 2, 3, 4) eine Kraft auf das Rad ausgeübt wird, so dass das Fahrzeug in seitlicher Richtung in eine bestimmte Position gebracht wird.

2. Verfahren nach Anspruch 1,
**dadurch gekennzeichnet, dass** die Istposition des Fahrzeugs erfasst wird und mit einer Sollposition des Fahrzeugs verglichen wird, wobei die Positionierung der Radaufnahme gegenüber den jeweiligen Radebenen abhängig von einer Abweichung der Istposition von der Sollposition erfolgt.

3. Verfahren nach Anspruch 1 oder 2,
**dadurch gekennzeichnet, dass** eine Positionierung des Fahrzeugs erfolgt, indem jeweils die Radaufnahme eines einzigen Rades einer Fahrzeugachse positioniert wird.

4. Verfahren nach einem der Ansprüche 1 oder 2,
**dadurch gekennzeichnet, dass** eine Positionierung des Fahrzeugs erfolgt, indem die Radaufnahmen der Räder beider Fahrzeugseiten positioniert werden.

5. Verfahren nach einem der Ansprüche 1 bis 4,
**dadurch gekennzeichnet, dass** eine Einstellung der Geometrie der Radachse eines Rades (20) erfolgt, wenn die Räder des Fahrzeugs stillstehen, wobei die Radaufnahme mehrerer anderer Räder in ihrer momentanen Position gebremst werden und wobei die Radaufnahme des Rades, dessen Spur- und Sturzwinkel eingestellt werden soll, in der Horizontalen frei beweglich ist.

## Claims

1. Procedure for positioning a vehicle on a wheel alignment installation for the purpose of measuring, or measuring and adjusting, the wheel-axle geometry of the vehicle's wheels, each of the wheels (20) resting at least indirectly on two rolls (5, 6; 7, 8; 9, 10; 11, 12) of a wheel-receiving member (1, 2, 3, 4), of which rolls at least one can be rotated by a motor about the longitudinal axis of the roll (5, 6; 7, 8; 9, 10; 11, 12), said wheel-receiving member (1, 2, 3, 4) being pivoted about a fulcrum (14, 15, 16, 17), **characterised in that**, in order to position the vehicle in the lateral direction, at least one roll (5, 6; 7, 8; 9, 10; 11, 12) of one wheel-receiving member (1, 2, 3, 4) for at least one wheel on each vehicle axis is motor-driven, and that, by means of a positioning element, the wheel-receiving member (1, 2, 3, 4) is positioned by rotation about the fulcrum (14, 15, 16, 17) in such manner relative to the wheel plane that a force is exerted on the wheel by the wheel-receiving member (1, 2, 3, 4) and the vehicle is moved laterally into a given position.

2. Procedure according to claim 1,
**characterised in that** the actual position of the vehicle is measured and compared with a required vehicle position, positioning of the wheel-receiving member relative to the respective wheel planes being effected as a function of any discrepancy between the actual position and the required position.

3. Procedure according to claim 1 or 2,
**characterised in that** positioning of the vehicle is effected by positioning the wheel-receiving member of a single wheel on a vehicle axle.

4. Procedure according to one of the claims 1 to 2,
**characterised in that** positioning of the vehicle is effected by positioning the wheel-receiving members of the wheels on both sides of the vehicle.

5. Procedure according to one of the claims 1 to 4,
**characterised in that** the geometry of the wheel axle of a wheel (20) is adjusted while the vehicle wheels are stationary, the wheel-receiving members of the other vehicle wheels being arrested in their momentary positions and the wheel-receiving member of the wheel for which the toe and camber angles are to be adjusted being freely movable in the horizontal plane.

## Revendications

1. Procédé pour positionner un véhicule sur un banc de contrôle de châssis en vue de mesurer ou de mesurer et de régler la géométrie d'essieux des roues du véhicule, les roues (20) étant positionnées chacune au moins indirectement sur deux rouleaux (5, 6 ; 7, 8 ; 9, 10 ; 11, 12) d'une prise de roues (1, 2, 3, 4), dont à chaque fois l'un au moins peut être entraîné en rotation par un moteur autour de l'axe longitudinal du rouleau (5, 6 ; 7, 8 ; 9, 10 ; 11, 12), la prise de roue (1, 2, 3, 4) étant logé pivotante autour d'un point de rotation (14, 15, 16, 17),
**caractérisé en ce que**, en vue du positionnement du véhicule en direction latérale, au moins un rouleau (5, 6 ; 7, 8 ; 9, 10 ; 11, 12) d'une prise de roue (1, 2, 3, 4) d'au moins une roue de chaque essieu du véhicule est entraîné par moteur et **en ce que** la prise de roue (1, 2, 3,4) est positionnée de telle sorte par rapport au plan de la roue au moyen d'un élément de réglage par une rotation autour du point de rotation (14, 15, 16, 17) qu'une force est exercée par la prise de roue (1, 2, 3, 4) sur la roue de telle sorte que le véhicule est déplacé en direction latérale dans une certaine position.

2. Procédé selon la revendication 1,
**caractérisé en ce que** la position réelle du véhicule est déterminée et comparée à une position théorique du véhicule, la prise de roue étant positionnée par rapport au plan de roue correspondant en fonction de l'écart entre la position réelle et la position théorique.

3. Procédé selon la revendication 1 ou 2,
**caractérisé en ce que** le véhicule est positionné en positionnant la prise de roue d'une seule roue d'un essieu du véhicule.

4. Procédé selon l'une des revendications 1 ou 2,
**caractérisé en ce que** le véhicule est positionné en positionnant les prises de roues des roues des deux côtés du véhicule.

5. Procédé selon l'une des revendications 1 à 4,
**caractérisé en ce que** la géométrie de l'essieu d'une roue (20) est réglée lorsque les roues du véhicule sont à l'arrêt, les prises de roues de plusieurs autres roues étant freinées dans leur position momentanée et la prise de roue de la roue dont l'angle de pincement et de piquée doit être réglée étant librement mobile horizontalement.
